# EUROPEAN PATENT APPLICATION

(11) **EP 4 714 577 A1**
(43) Date of publication of application: **25.03.2026**
(21) Application number: 24207708.9
(22) Date of filing: 21.10.2024
(51) Int. Cl.: B23B 23/04

(54) **MACHINE TOOL CENTER STRUCTURE**

(30) Priority: 20.09.2024 CN 202422303816 U
(71) Applicant: Juxin Machine Tools Co., Ltd., Taizhou, Zhejiang (CN)
(72) Inventor: Feng, Wenbo, Taizhou, Zhejiang (CN)
(74) Representative: Cabinet Chaillot

(57) **Abstract**

The disclosure provides a machine tool center structure, and belongs to the technical field of machine tool equipment. The disclosure solves the problem of reduced machining accuracy resulting from inability of existing machine tool centers to rotate. The machine tool center structure includes a center base, where the center base is provided with a center head capable of self-rotating circumferentially relative to the center base, one end of the center head is mounted in the center base in a limiting manner, and the other end of the center head is located outside the center base for abutting against a workpiece. The disclosure has the advantage of improving machining accuracy of workpieces.

## Description

### TECHNICAL FIELD

The disclosure belongs to the technical field of machine tool equipment, and relates to a machine tool center structure.

### BACKGROUND

A machine tool refers to a machine that manufactures machines, is also known as mother machine or tool machine, and is conventionally referred to as machine tool. The machinery industry usually uses gray cast iron with good wear resistance and shock absorption to manufacture machine tool bodies, but parts with high accuracy and fine surface roughness generally need to be finally processed on machine tools by cutting. Machine tools play an important role in the modernization of national economy.

The machine tool is mainly composed of a headstock, a feed box, a tool rest and a tailstock. For clamping a workpiece, a chuck is generally used to cooperate with a center to fix the workpiece. In particular, a long workpiece needs to be supported by the center. When an existing center is mounted on a center base, the center is fixed relative to the center base and cannot rotate relative to the center base, which results in the following main problem: when the workpiece is subject to a radial force from a tool during working, the workpiece is prone to radial runout, and inability of the center to adaptively rotate for fine adjustment results in reduced machining accuracy of the workpiece.

### SUMMARY

The object of the disclosure is to solve the above problems and provide a machine tool center structure capable of improving machining accuracy of workpieces.

In order to achieve the above object, the disclosure adopts the following technical solutions.

A machine tool center structure, includes a center base, where the center base is provided with a center head capable of self-rotating circumferentially relative to the center base, one end of the center head is mounted in the center base in a limiting manner, and the other end of the center head is located outside the center base for abutting against a workpiece.

In the machine tool center structure described above, preferably, the center base is detachably connected with the center head.

In the machine tool center structure described above, preferably, the center base is provided with an accommodating groove for accommodating the center head, and the accommodating groove is provided with a positioning and mounting structure which cooperates with the center head for mounting the center head.

In the machine tool center structure described above, preferably, the positioning and mounting structure includes a positioning bush assembly and a mounting member, the center head is arranged in the positioning bush assembly in a limiting and penetrating manner, an inner surface of the positioning bush assembly abuts against the center head, and an outer surface of the positioning bush assembly abuts against an inner surface of the accommodating groove, and the mounting member is arranged on an outer side of the positioning bush assembly to prevent the positioning bush assembly and the center head from sliding out of the accommodating groove.

In the machine tool center structure described above, preferably, the center head includes a working head and a connecting body, the working head is located outside the center base and has a tip at one end away from the connecting body, the positioning bush assembly is sheathed on the connecting body, and a limiting snap ring is provided at a tail end of the connecting body to abut against a side portion of the positioning bush assembly.

In the machine tool center structure described above, preferably, the positioning bush assembly includes at least one bush member, and the accommodating groove is provided with an abutting step which cooperates with each bush member for abutting of the bush member.

In the machine tool center structure described above, preferably, when more than one bush member is provided, adjacent bush members are spaced apart by a sleeve, the limiting snap ring abuts against an outer end portion of the bush member on a side away from the working head, and an inner surface of the mounting member abuts against an outer end portion of the bush member on a side close to the working head.

In the machine tool center structure described above, preferably, the bush member may be a bearing.

In the machine tool center structure described above, the mounting member is detachably connected with the center base by threads, and the threads are arranged on an outer surface of the mounting member.

In the machine tool center structure described above, preferably, the center head is provided with a radially protruding connecting ring between the working head and the connecting body, and an inner surface of the connecting ring abuts against a side portion of the positioning bush assembly close to a side of the working head.

Compared with the prior art, the disclosure has the following advantages: the center head abuts against the end portion of the workpiece to limit and fix the workpiece; when the workpiece rotates, the center head rotates together with the workpiece; when the workpiece is subject to radial runout due to a radial force from a tool during machining, the center rotates adaptively for fine adjustment to maintain coaxiality between the center and the workpiece, thereby improving machining accuracy of the workpiece.

Additional advantages, objects, and features of the disclosure will be set forth in part in the description which follows and in part will become apparent to those having ordinary skill in the art upon examination of the following or may be learned from practice of the disclosure.

### BRIEF DESCRIPTION OF THE DRAWINGS

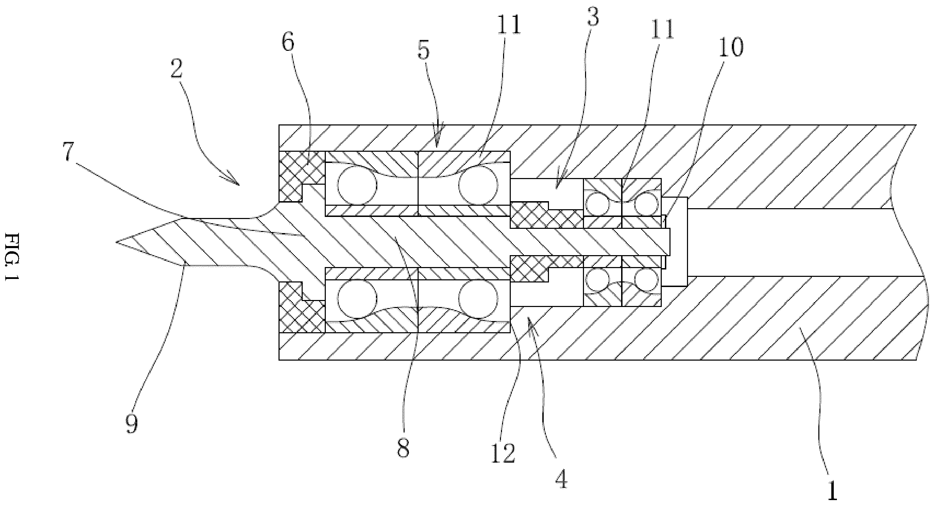

FIG. 1 is a structural sectional view of the disclosure.

Reference numerals in the figures: 1. center base; 2. center head; 3. accommodating groove; 4. positioning and mounting structure; 5. positioning bush assembly; 6. mounting member; 7, working head; 8. connecting body; 9, tip; 10. limiting snap ring; 11. bush member; 12. abutting step; and 13. connecting ring.

### DESCRIPTION OF THE EMBODIMENTS

The disclosure is further described below with reference to the accompanying drawing.

As shown in FIG. 1, a machine tool center structure, includes a center base 1, where the center base 1 is provided with a center head 2 capable of self-rotating circumferentially relative to the center base 1, one end of the center head 2 is mounted in the center base 1 in a limiting manner, and the other end of the center head 2 is located outside the center base 1 for abutting against a workpiece.

The circumferential self-rotation of the center head 2 relative to the center base 1 can reduce direct contact between the center head 2 and the center base 1 by sheathing and fixing a wear-resistant sleeve or a bearing on an outer surface of the center head 2 to reduce wear, and then a wearing ring may be provided on an inner side of the center base 1 or a step may be directly machined to allow the wear-resistant sleeve or the bearing or an inner end side portion of the center head 2 to abut against to limit movement of the end portion, and then a cover body such as an end cover is provided on an outer side portion of the center base 1 to limit the other side of the center head 2, so that the center head 2 is entirely limited in the center base 1, and the center head 2 can rotate by the wear-resistant sleeve or the bearing.

In the embodiment, the center base 1 is mounted on a machine tool, and the center base 1 may be either a fixed working bench directly fixed on a machine tool base or a moving working bench moving relative to the workpiece; when the workpiece is fixed, the center head 2 abuts against an end portion of the workpiece; when the workpiece rotates, the center head 2 rotates together with the workpiece; and when the workpiece is subject to radial runout due to a radial force from a tool during machining, the center rotates adaptively for fine adjustment to maintain coaxiality between the center and the workpiece, thereby improving machining accuracy of the workpiece.

In order to facilitate replacement of the center head 2, the center base 1 is detachably connected with the center head 2. The needle head 2 is worn to a certain degree over long-term use, and the detachable connection can save machining costs.

Specifically, in the embodiment, the center base 1 is provided with an accommodating groove 3 for accommodating the center head 2, and the accommodating groove 3 is provided with a positioning and mounting structure 4 which cooperates with the center head 2 for mounting the center head 2. The positioning and mounting structure 4 is intended to improve mounting accuracy and operational stability of the center head 2 relative to the center base 1.

Specifically, the positioning and mounting structure 4 includes a positioning bush assembly 5 and a mounting member 6, the center head 2 is arranged in the positioning bush assembly 5 in a limiting and penetrating manner, an inner surface of the positioning bush assembly 5 abuts against the center head 2, and an outer surface of the positioning bush assembly 5 abuts against an inner surface of the accommodating groove 3, and the mounting member 6 is arranged on an outer side of the positioning bush assembly 5 to prevent the positioning bush assembly 5 and the center head 2 from sliding out of the accommodating groove 3.

The center head 2 is sheathed by the positioning bush assembly 5, so that a majority of a periphery of the center head 2 is wrapped by the positioning bush assembly 5, and a gap between the center head 2 and the inner surface of the accommodating groove 3 is filled by the positioning bush assembly 5 to prevent the center head 2 from endplay when rotating circumferentially, thereby ensuring operation accuracy of the center head 2; and after the positioning bush assembly 5 and the center head 2 are mounted in a cooperative manner, the positioning bush assembly 5 is limited by the mounting member 6, so that the positioning bush assembly 5 is entirely accommodated in the accommodating groove 3.

In the embodiment, the center head 2 includes a working head 7 and a connecting body 8, the working head 7 is located outside the center base 1 and has a tip 9 at one end away from the connecting body 8, the positioning bush assembly 5 is sheathed on the connecting body 8, and a limiting snap ring 10 is provided at a tail end of the connecting body 8 to abut against a side portion of the positioning bush assembly 5. The limiting snap ring 10 is detachably connected to the connecting body 8; when the positioning bush assembly 5 is sheathed onto the connecting body 8, the limiting snap ring 10 is mounted to prevent the positioning bush assembly 5 from detaching from the tail end portion of the connecting body 8; and the limiting snap ring 10 can be fixed to the connecting body 8 by threads or snap-fit.

The positioning bush assembly 5 includes at least one bush member 11. In order to maintain stable operation of the bush member 11, the accommodating groove 3 is provided with an abutting step 12 which cooperates with each bush member 11 for abutting of the bush member 11, and an end portion of each bush member 11 close to the tail end of the connecting body 8 abuts against the abutting step 12. When more than one bush member 11 is provided, adjacent bush members 11 are spaced apart by a sleeve, which is advantageous to reduce direct contact between the bush members 11, reduce wear, and also helps to dissipate heat. The limiting snap ring 10 abuts against an outer end portion of the bush member 11 on a side away from the working head 7, an inner surface of the mounting member 6 abuts against an outer end portion of the bush member 11 on a side close to the working head 7, and the limiting snap ring 10 cooperates with the mounting member 6, so that the bush member 11 is mounted on the connecting body 8 of the center head 2 in an entire limiting manner.

In the embodiment, the bush member 11 may be a bearing without limitation on the type of bearing, and the same bush member may be formed by combining one or more bearings of the same size, an inner surface of a bearing inner race of the bearing abuts against an outer surface of the connecting body 8, and an outer surface of a bearing outer ring abuts on the inner surface of the accommodating groove 3; when a plurality of bush members 11 are provided, inner races of adjacent bearing inner races abut against the sleeve, and the limiting snap ring 10 abuts against an outer end portion of the bearing inner race of the bearing on a side away from the working head 7; and when the center head 2 rotates relative to the center base 1, the bearing rotates together with balls or rollers between the inner race and the outer race, thereby maintaining efficient and stable rotation of the center head 2.

Specifically, the mounting member 6 is detachably connected with the center base 1 by threads, and the threads are arranged on an outer surface of the mounting member 6.

In order to improve rotational stability of the center head 2, the center head 2 is provided with a radially protruding connecting ring 13 between the working head 7 and the connecting body 8, and an inner surface of the connecting ring 13 abuts against a side portion of the positioning bush assembly 5 close to a side of the working head 7.

The specific embodiments described herein are merely illustrative of the spirit of the disclosure. Those skilled in the art to which the disclosure belongs may make various modifications or supplements or similar alternatives to the described specific embodiments without departing from the spirit of the disclosure or exceeding the scope defined in the appended claims.

Although the terms center base 1, center head 2, accommodating groove 3, positioning and mounting structure 4, positioning bush assembly 5, mounting member 6, working head 7, connecting body 8, tip 9, limiting snap ring 10, bush member 11, abutting step 12, connecting ring 13, etc. are used more often herein, the possibility of using other terms is not excluded. These terms are only used to describe and explain the essence of the disclosure more conveniently, and interpreting them as any additional limitation is contrary to the spirit of the disclosure.

## Claims

1. A machine tool center structure, comprising a center base (1), wherein the center base (1) is provided with a center head (2) capable of self-rotating circumferentially relative to the center base (1), one end of the center head (2) is mounted in the center base (1) in a limiting manner, and the other end of the center head (2) is located outside the center base (1) for abutting against a workpiece.

2. The machine tool center structure according to claim 1, wherein the center base (1) is detachably connected with the center head (2).

3. The machine tool center structure according to claim 1, wherein the center base (1) is provided with an accommodating groove (3) for accommodating the center head (2), and the accommodating groove (3) is provided with a positioning and mounting structure (4) which cooperates with the center head (2) for mounting the center head (2).

4. The machine tool center structure according to claim 3, wherein the positioning and mounting structure (4) comprises a positioning bush assembly (5) and a mounting member (6), the center head (2) is arranged in the positioning bush assembly (5) in a limiting and penetrating manner, an inner surface of the positioning bush assembly (5) abuts against the center head (2), and an outer surface of the positioning bush assembly (5) abuts against an inner surface of the accommodating groove (3), and the mounting member (6) is arranged on an outer side of the positioning bush assembly (5) to prevent the positioning bush assembly (5) and the center head (2) from sliding out of the accommodating groove (3).

5. The machine tool center structure according to claim 4, wherein the center head (2) comprises a working head (7) and a connecting body (8), the working head (7) is located outside the center base (1) and has a tip (9) at one end away from the connecting body (8), the positioning bush assembly (5) is sheathed on the connecting body (8), and a limiting snap ring (10) is provided at a tail end of the connecting body (8) to abut against a side portion of the positioning bush assembly (5).

6. The machine tool center structure according to claim 5, wherein the positioning bush assembly (5) comprises at least one bush member (11), and the accommodating groove (3) is provided with an abutting step (12) which cooperates with each bush member (11) for abutting of the bush member (11).

7. The machine tool center structure according to claim 6, wherein when more than one bush member (11) is provided, adjacent bush members (11) are spaced apart by a sleeve, the limiting snap ring (10) abuts against an outer end portion of the bush member (11) on a side away from the working head (7), and an inner surface of the mounting member (6) abuts against an outer end portion of the bush member (11) on a side close to the working head (7).

8. The machine tool center structure according to claim 6, wherein the bush member (11) is a bearing.

9. The machine tool center structure according to claim 4, wherein the mounting member (6) is detachably connected with the center base (1) by threads, and the threads are arranged on an outer surface of the mounting member (6).

10. The machine tool center structure according to claim 5, wherein the center head (2) is provided with a radially protruding connecting ring (13) between the working head (7) and the connecting body (8), and an inner surface of the connecting ring (13) abuts against a side portion of the positioning bush assembly (5) close to a side of the working head (7).
